# EUROPÄISCHE PATENTANMELDUNG

(11) **EP 0 528 155 A2**
(43) Veröffentlichungstag der Anmeldung: **24.02.1993**
(21) Anmeldenummer: 92111323.9
(22) Anmeldetag: 03.07.1992
(51) Int. Cl.: B23B 31/16, B24B 41/06

(54) **Spannfutter für Werkzeugmaschinen**

(30) Priorität: 19.08.1991 CH 2433/91
(71) Anmelder: FORKARDT SPANNZEUG AG, CH-8307 Effretikon (CH)
(72) Erfinder: Sigrist, Max, CH-8307 Effretikon (CH)
(74) Vertreter: Troesch Scheidegger Werner AG

(57) **Zusammenfassung**

Im Grundfutter (1) ist ein achsial zur Drehachse der Werkzeugmaschine bewegbarer hydraulischer Kolben (6) mit daran angebrachten Befestigungsbolzen (5) vorgesehen. Am Ende des Befestigungsbolzens (5) ist das federbetätigte Befestigungsfutter (13) achsial verschiebbar befestigt. Ebenfalls sind im Grundfutter Hydraulikkolben (10) mit daran angebrachten Abdrückbolzen (9) vorgesehen, deren eine Kolbenseite zusammen mit einer Seite des Kolbens (6) des Befestigungsbolzens (5) in Verbindung steht. Durch hydraulisches zusammendrücken der beiden Kolben (6,10) gegeneinander wird das Spannteil des Befestigungsfutters (13) gegen den Hauptkörper gedrückt und lässt das Werkstück (3) frei, wobei das Befestigungfutter (13) achsial bewegbar bleibt. Dadurch führen Bewegungen zwischen dem Werkstück (3) und dem Befestigunsfutter (13) nicht zum Abheben des Werkstückes (3) vom Zentrierdorn (2).

## Beschreibung

Die vorliegende Erfindung betrifft Spannfutter für Werkzeugmaschinen, insbesondere Rundschleifmaschinen, welche eine Antriebsspindel mit einem kopfseitig angeordneten Grundfutter und Zentriermittel aufweisen.

Spannfutter für Werkzeugmaschinen bestehen herkömmlicherweise aus einer mit Spannbacken versehen Einrichtung, welche an der Antriebsspindel der jeweiligen Werkzeugmaschine befestigt wird. Die Aufgabe des Spannfutters ist die kraftschlüssige Verbindung zwischen dem zu bearbeitenden Werkstück und der Antriebsspindel, damit die Drehbewegung der Antriebsspindel auf das Werkstück übertragen wird. Zur Zentrierung und damit Positionierung des Werkstückes dient ein an der Antriebsspindel in der Drehachse positioniert angebrachter Zentrierdorn.

Insbesondere bei automatisch beschickten Werkzeugmaschinen tritt das Problem auf, dass die herkömmlichen Spannfutter beim Befestigen des Werkstückes dieses vom Zentrierdorn infolge der Anpressdrücke der Spannbacken wegdrücken. Dadurch geht insbesondere bei sehr genau zu bearbeitenden Werkstücken ein Grossteil der Positioniergenauigkeit verloren, womit keine Werkstücke mit sehr geringen Toleranzen bearbeitet werden können.

Die Aufgabe der vorliegenden Erfindung bestand nun darin, ein Spannfutter zu finden, welches sich für die Beschickung der Werkzeugmaschine mit Werkstücken ohne Verlust der Positionierungsgenauigkeit eignet.

Diese Aufgabe wird erfindungsgemäss dadurch gelöst, dass am Grundfutter wenigstens zwei Befestigungsbolzen vorgesehen sind, an welchen ein separates Befestigungsfutter mit darin befindlichen Klemmbacken schwimmend gehalten ist, und dass das Befestigungsfutter einen Hauptkörper, darin radial verschiebbar gelagerte Klemmbacken und ein federbelastetes Spannteil aufweist, wobei das Spannteil schräg zur Drehachse der Werkzeugmaschine verlaufende Wirkflächen aufweist, welche mit entsprechend ausgebildeten Flächen am radial äusseren Ende der Klemmbacken zusammenwirken, um letztere bei achsialer Verschiebung des Spannteiles gegen die Drehachse zu drücken und dass Mittel im Grundfutter vorgesehen sind, um einerseits die Befestigungsbolzen in Längsrichtung zu bewegen und andererseits das Spannteil des Befestigungsfutters in Längsrichtung gegenüber dem Grundfutter zu bewegen.

Eine bevorzugte Ausführungsform der Erfindung sieht vor, dass die Befestigungsbolzen mit einem im Grundfutter achsial bewegbar angeordneten Hydraulikkolben verbunden sind und dass parallel zur Drehachse der Werkzeugmaschine ebenfalls im Gundfutter Abdrückbolzen achsial mittels Hydraulikkolben verschiebbar angeordnet sind, um in einer Endposition das Spannteil des Befestigungsfutters vom Grundfutter wegzudrücken.

Eine weitere, bevorzugte Ausführungsform zeichnet sich dadurch aus, dass die einander zugewandten Kolbenseiten der Hydraulikkolben der Abdrückbolzen und der Befestigungsbolzen einen gemeinsamen Druckraum aufweisen (hydraulisch miteinander in Verbindung stehen), so dass beim Druckaufbau auf diese Kolbenflächen die Abdrückbolzen gegen das Befestigungsfutter und die Befestigungsbolzen zum Grundfutter hin bewegt werden, und dass die einander abgewandten Kolbenseiten eine gemeinsame Druckzuleitung aufweisen.

In einer weiteren bevorzugten Ausführungsform der Erfindung sind alle Befestigungsbolzen an einem gemeinsamen, konzentrisch zur Antriebswelle im Grundfutter angeordneten, ringförmigen Hydraulikkolben befestigt.

Nochmals eine bevorzugte Ausführungsform sieht vor, dass jeweils drei bis sechs Befestigungsbolzen und drei bis sechs Abdrückbolzen vorhanden sind.

Eine weiter bevorzugte Ausführungsform zeichnet sich dadurch aus, dass das Befestigungsfutter durch die Befestigungsbolzen derart gehalten ist, dass nur eine kleine Verschiebung in Richtung der Antriebsachse ermöglicht wird.

Durch die erfindungsgemässe Ausführung des Spannfutters ist das mit den Klemmbacken versehene Befestigungsfutter gegenüber dem gegen den Zentrierdorn gepressten Werkstück schwimmend, d.h. in achsialer Richtung beweglich, mit dem Grundfutter verbunden. Dadurch können die infolge des Anpressens der Klemmbacken auf das Werkstück entstehenden kleinen Verschiebungen zwischen dem Spannfutter und den Klemmbacken aufgenommen werden, ohne dass dabei das Werkstück vom Zentrierdorn weggedrückt wird. Durch den Mitnehmerstift am Grundfutter wird die Drehbewegung der Antriebsspindel dennoch spielfrei auf das Werkstück übertragen. Auch beim Lösen der Klemmbacken bleibt das Werkstück gegen den Zentrierdorn positioniert, ohne verschoben zu werden. Das erfindungsgemässe Spannfutter eignet sich daher insbesondere vorzüglich für Werkzeugmaschinen mit automatischer Beschickung und ermöglicht die Bearbeitung von Werkstücken mit geringen Toleranzen, wie sie beispielsweise bei der Bearbeitung von Präzisionsteilen mit Rundschleifmaschinen gefordert werden.

Ein Ausführungsbeispiel der Erfindung wird nachstehend anhand von Zeichnungen noch näher erläutert.
Es zeigen
Fig. 1 den Längsschnitt durch ein erfindungsgemässes Grundfutter mit Antriebsspindel;
Fig. 2 den Längsschnitt durch ein erfindungsgemässes Befestigungsfutter.

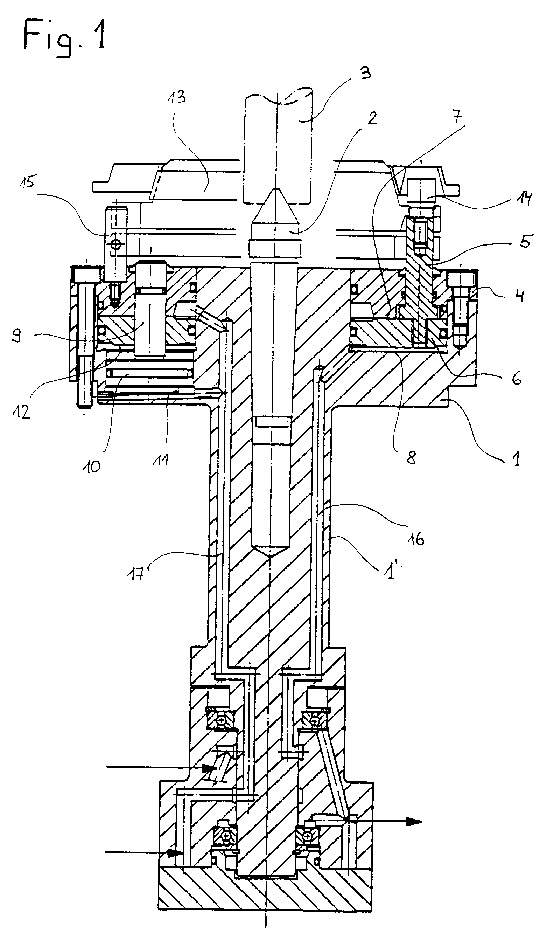

In Fig. 1 wird der Längsschnitt durch ein erfindungsgemässes Grundfutter 1 mit intergrierter Antriebsspindel 1' gezeigt. Im Grundfutter 1 ist der eingesetzte Zentrierdorn 2 mit schematisch dargestelltem Werkstück 3 in eingespanntem Zustand dargestellt. Das Grundfutter 1 weist eine verschraubte stirnseitige Abdeckung 4 auf, in welcher ein Befestigungsbolzen 5 achsial verschiebbar gelagert ist. Vorzugsweise werden drei Befestigungsbolzen in gleichem Abstand zueinander im Grundfutter angeordnet. Der Befestigungsbolzen 5 ist mit einem ringförmigen Hydraulikkolben 6 verbunden. Dieser Hydraulikkolben 5 ist zwischen einer Anschlagfläche 7 der Abdeckung 4 und einer Anschlagfläche 8 im Grundfutter 1 achsial bewegbar. Ferner ist ein Abdrückbolzen 9 ebenfalls achsial verschiebbar mit einem in das Grundfutter 1 eingelassenen Hydraulikkolben 10 verbunden. Den einen Anschlag des Hydraulikkolbens 10 bildet der Boden 11 im Grundfutter 1, der andere Anschlag wird durch die Fläche 12 des Hydraulikkolbens 6 gebildet. Der Abdrückbolzen 9 wird dabei durch eine entsprechende Öffnung des Kolbens 6 und der Abdeckplatte 4 gegen das Befestigungsfutter 13 aus dem Grundfutter herausgeführt. Vorzugsweise sind ebenfalls insgesamt drei Abdrückbolzen im Grundfutter 1 vorhanden. Das Befestigungsfutter 13, in Fig. 1 nur schematisch dargestellt, ist mittels eines auf den Befestigungsbolzen 5 geschraubten Verbindungsbolzen 14 schwimmend, d.h. achsial bewegbar mit dem Grundfutter 1 verbunden. Dazu weist das Befestigunsfutter 13 entsprechende Bohrungen auf, welche an der Stirnseite angefast sind und auf welche entsprechend konische Sitzflächen der Verbindungsbolzen 14 als Anschlag wirken können. Gegen das Grundfutter 1 hin wirkt eine durch den äusseren Rand des Befestigungbolzens 5 gebildete Kante als Anschlag. Zwischen diesen beiden Anschlägen ist das Befestigungsfutter 13 längs verschiebbar.
Für die Uebertragung der Drehbewegung auf das Befestigungsfutter 13 dient ein am Grundfutter 1 befestigter Mitnahmebolzen 15, welcher in eine entsprechende Nut des Befestigungsfutters 13 fasst.

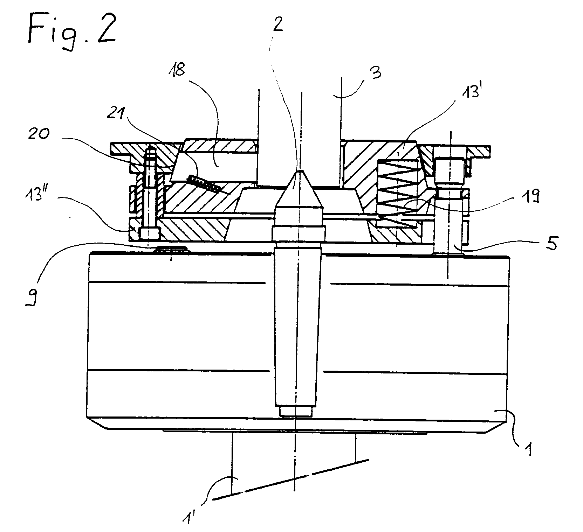

Die in Fig. 1 gezeigten Positionen des Befestigungsbolzen 5 und Abdrückbolzen 9 resp. ihrer zugehörigen Hydraulikkolben 6 und 10 entspricht dem eingespannten Zustand des Werkstückes 2 im Befestigungsfutter 13. Dieser Zustand wird durch Druckaufbau in die Druckzuführung 16 erreicht, welche den Hydraulikkolben 6 gegen die werkstückseitigen Anschlagfläche 7 und den Hydraulikkolben 10 gegen den Anschlag 11 bewegt und damit den Abdrückbolzen 9 in das Grundfutter 1 zurückzieht. Der Abstand der Anschlagflächen zwischen dem Befestigungsbolzen 5 resp. dem Verbindungsbolzen 14 und dem Befestigungsfutter 13 ist derart gewählt, dass die Bewegung des Befestigungsbolzens 5 keine Mitnahme des Befestigungsfutters 13 bewirkt. Das Werkstück 3 wird dabei von Klemmbacken 18, welche im Hauptkörper 13' des Befestigungsfutters 13 gelagert sind, gehalten, wie in Fig. 2 gezeigt. Die Feder 19 drückt dabei das Spannteil 13'' vom Hauptkörper 13' weg, wobei die schräg verlaufende Wirkfläche 20 des Spannteiles 13'' die Klemmbacken 18 gegen das Werkstück 3 drücken.
Um das Werkstück 3 zu lösen, muss gegen die Federkraft der Feder 19 das Spannteil 13'' gegen den Hauptkörper 13' gedrückt werden, wodurch die Klemmbacken 18 mittels Federn 21 radial gegen aussen vom Werkstück weggedrückt werden.
Dazu wird nun ein Druck in der Druckzuführung 17 der Antriebsspindel 1' aufgebaut. Dadurch wird der Kolben 10 gegen die Werkstückseite bewegt und der Abdrückbolzen 9 wird gegen das Spannteil 13'' des Befestigungsfutters 13 gedrückt. Ebenfalls wird durch den Druckaufbau der Kolben 6 von der Werkstückseite weg gegen die Anschlagsfläche 8 bewegt und zieht damit das Befestigungsfutter 13 gegen den Abdrückbolzen 9. Damit wird verhindert, dass der Abdrückbolzen 9 das Werkstück 3 vom Zentrierdorn 2 abdrückt. Die gesamte Einheit bestehend aus Befestigungsfutter 13, Befestigunsgsbolzen 5 mit Kolben 6 und Abdrückbolzen 9 mit Kolben 10 bleibt immer noch achsial bewegbar, wodurch Bewegungen, welche durch das Lösen der federbelasteten Klemmbacken 18 des Befestigungsfutters 13 vom Werkstück 3 herrühren können, ausgeglichen werden. Derartige Bewegungen können durch leichtes Verkanten der Klemmbacken 18 in ihren Führungen im Hauptkörper 13' entstehen. Um ein neues Werkstück 3 einzuspannen wird dieses gegen den Zentrierdorn 2 angedrückt und danach der Druck aus der Druckzuführung 17 abgebaut und in der Druckzuführung 16 aufgebaut. Dadurch fährt der Abdrückbolzen 9 wieder in das Grundfutter 1 zurück und der Befestigungsbolzen 5 wird ein Stück gegen die Stirnseite des Grundfutters 1 bewegt. Damit ist das Spannteil 13'' des Befestigungsfutters 13 wieder frei und lässt federbelastet die Klemmbacken 18 auf das Werkstück 3 wie oben beschrieben einwirken, wodurch das Werkstück 3 eingespannt wird.
Als besonders vorteilhaft wirkt sich die Anordnung der beiden Hydraulikkolben 6 und 10 auf die immer gewährleistete achsiale Verschiebbarkeit des Befestigungsfutters 13 aus, und zwar sowohl im gespannten wie im ungespannten Zustand des Befestigungsfutters 13. Dadurch können leichte achsiale Verschiebungen zwischen dem Werkstück 3 und dem Befestigungsfutter 13 während dem Spann- resp. Entspannvorgang aufgefangen werden und das Werkstück 3 wird dadurch nicht vom Zentrierdorn 2 weggedrückt. Somit kann insbesondere auch bei automatischer Zuführung von Werkstücken an das Spannfutter eine gleichbleibende Positionierung des Werkstückes gewährleistet werden und entsprechend eine Bearbeitung des Werkstückes mit kleinen toleranzen gewährleistet werden, wie sie beispielsweise bei der Bearbeitung von Präzisionsteilen mit Rundschleifmaschinen gefordert werden.

## Patentansprüche

1. Spannfutter für Werkzeugmaschinen, insbesondere Rundschleifmaschinen, welche eine Antriebsspindel mit einem kopfseitig angeordneten Grundfutter und Zentriermittel aufweisen, dadurch gekennzeichnet, dass am Grundfutter wenigstens zwei Befestigungsbolzen vorgesehen sind, an welchen ein separates Befestigungsfutter mit darin befindlichen Klemmbacken schwimmend gehalten ist, und dass das Befestigungsfutter einen Hauptkörper, darin radial verschiebbar gelagerte Klemmbacken und ein federbelastetes Spannteil aufweist, wobei das Spannteil schräg zur Drehachse der Werkzeugmaschine verlaufende Wirkflächen aufweist, welche mit entsprechend ausgebildeten Flächen am radial äusseren Ende der Klemmbacken zusammenwirken, um letztere bei achsialer Verschiebung des Spannteiles gegen die Drehachse zu drücken und dass Mittel im Grundfutter vorgesehen sind, um einerseits die Befestigungsbolzen in Längsrichtung zu bewegen und andererseits das Spannteil des Befestigungsfutters in Längsrichtung gegenüber dem Grundfutter zu bewegen.

2. Spannfutter nach Anspruch 1, dadurch gekennzeichnet, dass die Befestigungsbolzen mit einem im Grundfutter achsial bewegbar angeordneten Hydraulikkolben verbunden sind und dass parallel zur Drehachse der Werkzeugmaschine ebenfalls im Gundfutter Abdrückbolzen achsial mittels Hydraulikkolben verschiebbar angeordnet sind, um in einer Endposition das Spannteil des Befestigungsfutters vom Grundfutter wegzudrücken.

3. Spannfutter nach Anspruch 2, dadurch gekennzeichnet, dass die einander zugewandten Kolbenseiten der Hydraulikkolben der Abdrückbolzen und der Befestigungsbolzen einen gemeinsamen Druckraum aufweisen (hydraulisch miteinander in Verbindung stehen), so dass beim Druckaufbau auf diese Kolbenflächen die Abdrückbolzen gegen das Befestigungsfutter und die Befestigungsbolzen zum Grundfutter hin bewegt werden, und dass die einander abgewandten Kolbenseiten eine gemeinsame Druckzuleitung aufweisen.

4. Spannfutter nach einem der Ansprüche 2 oder 3, dadurch gekennzeichnet, dass alle Befestigungsbolzen an einem gemeinsamen, konzentrisch zur Antriebswelle im Grundfutter angeordneten, ringförmigen Hydraulikkolben befestigt sind.

5. Spannfutter nach einem der Ansprüche 2 bis 4, dadurch gekennzeichnet, dass jeweils drei bis sechs Befestigungsbolzen und drei bis sechs Abdrückbolzen vorhanden sind.

6. Spannfutter nach einem der Ansprüche 1 bis 5, dadurch gekennzeichnet, dass das Befestigungsfutter durch die Befestigungsbolzen derart gehalten ist, dass nur eine kleine Verschiebung in Richtung der Antriebsachse ermöglicht wird.
